Europäisches Patentamt

European Patent Office

Office européen des brevets

(11) Publication number: **0 590 203 A1**

# EUROPEAN PATENT APPLICATION

(21) Application number: **92203002.8**

(22) Date of filing: **30.09.92**

(51) Int. Cl.5: **A23D 7/00, A23D 7/02**

(43) Date of publication of application:
**06.04.94 Bulletin 94/14**

(84) Designated Contracting States:
**AT BE CH DE DK ES FR GB GR IE IT LI LU MC NL PT SE**

(71) Applicant: **UNILEVER N.V.**
**P.O. Box 760**
**NL-3000 DK Rotterdam(NL)**

(72) Inventor: **Lucassen-Reynders, Emmie Helena**
**c/o Unilever Research**
**Olivier v. Noortlaan 120**
**NL-3133 AT Vlaardingen(NL)**
Inventor: **Kuypers, Karel Abraham**
**c/o Unilever Research**
**Olivier v. Noortlaan 120**
**NL-3133 AT Vlaardingen(NL)**

(74) Representative: **Sikken, Antonius H. J. M. et al**
**UNILEVER N.V.,**
**Patent Division,**
**P.O. Box 137**
**NL-3130 AC Vlaardingen (NL)**

(54) **Ultra low fat spread without thickening agent.**

(57) The present invention relates to an ultra low fat spread. The spread is a fat-continuous dispersion having a fat content of only 5-13.9 wt.% The dispersed aqueous phase is characterised by the absence of any gelling or thickening agent.

Proper emulsifiers are triglycerol esters or combinations of a triglycerol ester and a co-emulsifier, e.g. a monoacyl glycerol mixture.

The spread can be prepared by slowly adding water phase to a stirred fat continuous dispersion with a reduced fat content.

The spread is microbiologically stable and no water loss is observed. It is easily spreadable and has a good consistency.

EP 0 590 203 A1

The present invention concerns an edible, stable, water-in-oil dispersion which contains no more than 13,9 % fat.

Another aspect of the invention is that it concerns a water-in-oil dispersion with a dispersed aqueous phase which contains no thickening and/or gelling agent.

The last few decades have seen a rising demand for food products of a low fat content. Butter and margarine are spreads consisting of a stable water-in-oil dispersion. When decreasing the fat content, i.e. reducing the continuous phase, the stability of the dispersion is threatened. Phase separation or phase inversion may be the result. The developing spread technology has yielded stable low-calorie substitutes for butter and margarine with an ever decreasing fat content. Low fat spreads based on W/O emulsions presently available on the market have a fat content which may be as low as 18%.

Fat-continuous spreads of still lower fat content are more difficult to produce, since manufacturing problems worsen with increasing water content and a still further reduced continuous fat phase. One reason for this is that droplets of any liquid can be dispersed as spherical particles in another liquid phase up to a maximum volume percentage which is only little more than 74%. Another reason in the specific case of edible fat spreads is that the ratio of the viscosity of a non-thickened water phase and that of the oil phase does not favour fat continuity. According to current phase inversion technology the viscosity ratio is therefore adapted by making the water phase more viscous using thickening and/or gelling agents.

EP 0 430 329 describes water-in-oil emulsions containing 5-14 wt.% fat. The invention is exemplified by several compositions using a gelling aqueous phase. The only exemple describing the use of a non-gelling aqueous phase can not be reproduced, however.

Research Disclosure 332, 921 (1991) describes 8-10% fat spreads with a dispersed water phase, but containing 9-12% thickening and/or gelling agents.

An increasing consumer demand for more natural products has created a need for spreads with a minimum of additional ingredients. Until now it was not believed to be practically possible to prepare stable ultra low fat spreads containing less than 14 wt.% fat, comprising a dispersed water phase without any gelling or thickening agent. Ultra low fat spreads prepared with a non-thickened water phase so far have been found to be liable to phase separation within a few hours.

STATEMENT OF INVENTION

It has now been found that a stable dispersion can be prepared with a continuous fat phase containing only 5-13.9 wt.% fat and a dispersed water phase which is free from any thickening or gelling agent, provided a proper emulsifier is used.

DETAILED DESCRIPTION

With a stable dispersion is meant a dispersion which after preparation can be kept for at least several days at a temperature of 2-20°C, under quiescent conditions, without any substantial water separation or phase inversion being observed.

In this specification, unless otherwise indicated, the term 'fat' refers to edible fatty substances in a general sense, including natural or synthesized fats and oils consisting essentially of triglycerides such as, for example, soybean oil, sunflower oil, palm oil, coconut oil, fish oil, lard and tallow, which may have been partially or completely hydrogenated or modified otherwise, as well as non-toxic fatty materials having properties similar to triglycerides, which materials may be indigestible, such as for example waxes, e.g. jojoba oil and hydrogenated jojoba oil, and polyol fatty acid polyesters referred to hereinafter in more detail. The terms fat and oil are used interchangeably.

In this specification the term 'polyol' is intended to refer to any aliphatic or aromatic compound which comprises at least four free hydroxyl groups. Such polyols in particular include the group of sugar polyols, which comprises the sugars, i.e. the mono-, di- and oligosaccharides, the corresponding sugar alcohols and the derivatives thereof having at least four free hydroxyl groups. Examples of sugar polyols include glucose, mannose, galactose, xylose, fructose, sorbose, tagatose, ribulose, xylylose, maltose, lactose, cellobiose, raffinose, sucrose, erythritol, mannitol, lactitol, sorbitol, xylitol and alpha-methylglucoside. A generally used and preferred sugar polyol is sucrose.

In this specification the term 'polyol fatty acid polyester' is intended to refer to any such polyesters or mixtures thereof of which, on an average, more than 70% of the polyol hydroxyl groups have been esterified with fatty acids. In this specification by 'indigestible' is meant that at least about 70% by weight of the material concerned is not digested by the human body.

The amount of fat in the fat phase is 5-13.9 wt.%, preferably 5-13 wt.%, more preferably 5-12 wt.%. The

2

fats comprising the fat phase are chosen such that the saturated fat content is low, preferably less than 3 wt.%. If not indicated otherwise all percentages in this specification and the appending claims are related to total spread. The solids content of the fat phase, $N_{20}$, preferably is >2, more preferably 8-55. The N-value for a fat or a fat phase composition at a certain temperature t°C, $N_t$, is expressed in % of the weight of that composition. It can conveniently be measured by means of NMR as described in Fette, Seife, Anstrichmittel 80, (1978), 180-186.

Apart from the condition that sufficient solid fat should be present, the nature of the fat is not critical. Oils suitable for incorporating in the fat phase are e.g. sunflowerseed oil and palm oil.

For optimal physical stability of the final product, the solid fat should have been crystallized in its smallest possible crystal form according to methods known in the art.

Proper emulsifiers preferably are e.g. the triglycerol ester of fatty acids, preferably of ricinoleic acid marketed as TRIODAN R90™ or polyglycerol esters, such as the polyglycerol ester of polycondensed ricinoleic acid, marketed as ADMUL WOL™.

The amount of emulsifier preferably is 0.5-0.75 wt.% Higher amounts would prevent a proper disintegration of the dispersion in the mouth, resulting in a waxy mouthfeel. Optionally, a co-emulsifier can be applied so that less than 0.5 wt.% of the main emulsifier is needed. Suitable co-emulsifiers are e.g. monoacyl glycerol mixtures such as DIMODAN LS™. When used together a preferred amount of each emulsifier is about 0.375 wt.%.

Salt, flavours and colouring agents may be added to the spread as optional ingredients.

The spread according to the invention can be prepared e.g. by first making a fat-continuous dispersion with a moderately reduced, e.g. 35 wt.% fat content. This can be achieved by any conventional method, e.g. by feeding the aqueous phase and the fat phase in the proper ratio, e.g. 65/35 into a Votator™ unit, resulting into a reduced-fat W/O dispersion.

Then the water content of the dispersion is increased by slowly adding to the stirred dispersion the remaining water phase until the fat content has dropped to a value in the range of 5-13.9 wt.% fat. Preferably the water phase is added to the mixture in such a way that an extensional flow regime is created. This promotes diminution of the water phase droplets far more effectively than simple shear flow does.

The eventual dispersion contains a minimum amount of non-natural ingredients. An advantage of the present invention is that the special measures of the prior art procedures necessary for a proper gelation and/or thickening of the water phase can be omitted in the present production process.

The obtained dispersion is a spread which can be used as a low-calorie substitute for butter or margarine. It possesses good microbiological and physical stability and a good consistency and appearance. Spreadability and mouthfeel are as good as commercial 20% fat products.

**Example 1**

An edible dispersion with the following composition was prepared:

|  |  | gram |  |
|---|---|---|---|
| Liquid fat: | | 100 | sunflowerseed oil |
| Solid fat: | | 17.5 | inES50 |
| Emulsifiers: | | 3.75 | Triodan R90™ |
|  |  | 3.75 | Dimodan LS™ |
| Colourant: |  | 0.005 | β-carotene |
|  |  |  | Fat phase: 12.5% |
| Water: | 865 | | |
| Salt: | 10 | | sodium chloride |
|  |  |  | Aqueous phase: 87.5% |

The solid fat inES50, a randomly interesterified blend (40PKf41/60PO58) hydrogenated to a slip melting point of 50°C, was dissolved in the heated liquid fat and then crystallised by deep cooling at a temperature of -10°C after feeding into an A-unit (scraped-surface heat exchanger). Very small crystals were formed. After warming up the fat phase to room temperature, the emulsifiers and the colourant were added. A pre-emulsion was prepared in a glass beaker by slowly adding the water phase, at a rate of less than 1.5 g/min, to the fat phase under stirring with a wing stirrer operated at 1000 rpm. At 35% aqueous phase content the addition of water was discontinued and the rate of stirring was increased to 2000 rpm for 10 min. The pre-emulsion was then homogenised with an Ultra-Turrax™ for about 1 min, until a drop size (volume-weighted geometric mean diameter) of approximately 6 $\mu$m was attained.

The pre-emulsion was then transferred to a kitchen mixer (Krups Robo Mix 4004™) operating at an initial speed of approximately 400 rpm. The remainder of the aqueous phase was added, again at a rate of less than 1.5 g/min. A flavour cocktail was added when aqueous phase content was 80%. At 87.5% aqueous phase, stirring was continued for 20 min without further addition of water, and then the product was transferred to plastic tubs and stored in a refrigerator at about 8°C. The sample was fat-continuous, and had a water drop size of approximately 15 $\mu$m. It was stable and easily spreadable. No water loss was observed and the microbiological stability was good.

## Example 2

The procedure of Example 1 was repeated with the exception that the emulsifier now consisted of 5 gram of Triodan R90™ as sole emulsifier. The obtained sample was fat-continuous and easily spreadable. No water loss was observed and the microbiological stability was good.

## Claims

1. Water-in-oil dispersion which contains a water phase dispersed in 5-13.9 wt.% fat and an emulsifier characterised in that the water phase is substantially free from any thickening and/or gelling agent.

2. Water-in-oil dispersion which contains a water phase dispersed in 5-13.0 wt.% fat and an emulsifier characterised in that the water phase is substantially free from any thickening and/or gelling agent.

3. Water-in-oil dispersion which contains a water phase dispersed in 5-12.0 wt.% fat and an emulsifier characterised in that the water phase is substantially free from any thickening and/or gelling agent.

4. Dispersion according to any one of claims 1-3, characterised in that the fat phase has a solid fat content $N_{20}$ in the range 8-55.

5. Dispersion according to any one of claims 1-4, characterised in that the emulsifier is a triglycerol ester of fatty acids or a combination of a triglycerol ester of fatty acids and a co-emulsifier.

6. Dispersion according to any one of claims 1-4, characterised in that the emulsifier is a polyglycerol ester of fatty acids or a combination of a polyglycerol ester of fatty acids and a co-emulsifier.

7. Dispersion according to claim 5 or 6, characterised in that the fatty acid is ricinoleic acid.

8. Dispersion according to any one of claims 5-7, characterised in that the amount of emulsifier is about 0.5-0.75 wt.%.

9. Dispersion according to claim 5, characterised in that the emulsifier consists of the triglycerol ester of ricinoleic acid and a monoacyl glycerol mixture.

10. Dispersion according to claim 9, characterised in that the emulsifier consists of about 0.375 wt.% of the triglycerol ester of ricinoleic acid and about 0.375 wt.% of a monoacyl glycerol mixture.

11. Dispersion according to any one of claims 1-10, characterised in that the amount of saturated fat is less than 3 wt.% on total product.

**12.** Process for the preparation of a water-in-oil dispersion which contains a water phase dispersed in 5-13.9 wt.% fat and a proper emulsifier, the said water phase being substantially free from any thickening and/or gelling agent, which comprises the following steps:

    a. preparing a water-in-oil dispersion containing at least 30 wt.% fat and a proper emulsifier, using a water phase being substantially free from any thickening and/or gelling agent,

    b. homogenising the dispersion,

    c. adding water phase to the stirred dispersion,

lowering the fat content until a level in the range of 5-13.9 wt.% has been attained.

**13.** Process for the preparation of a water-in-oil dispersion which contains a water phase dispersed in 5-13 wt.% fat and a proper emulsifier, the said water phase being substantially free from any thickening and/or gelling agent, which comprises the following steps:

    a. preparing a water-in-oil dispersion containing at least 30 wt.% fat and a proper emulsifier, using a water phase being substantially free from any thickening and/or gelling agent,

    b. homogenising the dispersion,

    c. adding water phase to the stirred dispersion,

lowering the fat content until a level in the range of 5-13 wt.% has been attained.

**14.** Process for the preparation of a water-in-oil dispersion which contains a water phase dispersed in 5-12 wt.% fat and a proper emulsifier, the said water phase being substantially free from any thickening and/or gelling agent, which comprises the following steps:

    a. preparing a water-in-oil dispersion containing at least 30 wt.% fat and a proper emulsifier, using a water phase being substantially free from any thickening and/or gelling agent,

    b. homogenising the dispersion,

    c. adding water phase to the stirred dispersion,

lowering the fat content until a level in the range of 5-12 wt.% has been attained.

**15.** Process according claims 12-14, characterized in that adding the water phase under c. is under an extensional flow regime.

**16.** Process according to claim 11, characterized in that the emulsifier is a triglycerol ester or a combination of a triglycerol ester and a co-emulsifier.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X<br>Y | EP-A-0 430 329 (UNILEVER NV)<br>* claims 1-5; example 14 * | 1,2<br>1-3,<br>6-10,<br>12-14 | A23D7/00<br>A23D7/02 |
| Y | RESEARCH DISCLOSURE<br>vol. 327, no. 039, 1991, EMSWORTH, GB<br>'15-25% FAT SPREAD WITH PGPR' | 1-3,<br>6-10,<br>12-14 | |
| Y | WO-A-8 907 893 (DAIRY CREST LIMITED) | 1-3,<br>6-10,<br>12-14 | |
| A | * page 6, paragraph 3; claims 1,7,8,10; example 4 *<br>* page 13, paragraph 3 - page 14, paragraph 1 *<br>* page 10, paragraph 2 -paragraph 3 *<br>* page 4, paragraph 2 - page 5, paragraph 3 * | 15 | |
| X<br>A | WO-A-9 009 107 (GRINDSTED PRODUCTS A.S.)<br>* page 4, line 22 - line 28; claims 1,4 *<br>* page 7, line 20 - line 27 *<br>* page 10, line 30 - page 11, line 16 *<br>* page 13, line 15 - line 30 * | 1-4,8<br>9,10 | **TECHNICAL FIELDS SEARCHED (Int. Cl.5)**<br><br>A23D |
| A | DATABASE WPIL<br>Section Ch, Week 8933, 1989<br>Derwent Publications Ltd., London, GB;<br>Class D, AN 89-239584<br>* abstract *<br>& RESEARCH DISCLOSURE<br>vol. 303, no. 018, 10 July 1989, EMSWORTH, GB<br>GRINSTED PRODUCTS 'BAKERY COMPOUND WITH HIGH WATER CONTENT ... PGPR-ESTER ... LIQUID EMULSION' | 5,7,9 | |

-/--

The present search report has been drawn up for all claims

| Place of search | Date of completion of the search | Examiner |
|---|---|---|
| THE HAGUE | 18 MAY 1993 | KANBIER D.T. |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | PATENT ABSTRACTS OF JAPAN vol. 010, no. 345 20 November 1986 & JP-A-61 149 042 ( MEIJI MILK PROD. CO. LTD. ) 7 July 1986 * abstract * | 5-8,10, 16 | |
| A | EP-A-0 279 498 (UNILEVER NV) * page 3, line 25 - line 33; claims 1-5,10; examples 1,4 * | 1-4,6-8, 12-16 | |
| A | EP-A-0 430 180 (MITSUBISHI KASEI CORPORATION) * page 2, line 52 - page 3, line 2; claims 1-3,6,9,10; tables 1,2 * * page 3, line 31 - line 52 * | 1-8,11 | |
| A | EP-A-0 120 967 (MEIJI MILK PROD. CO. LTD.) * page 2 - page 3; claims 1-3 * | 6-8, 12-14 | |
| A | PATENT ABSTRACTS OF JAPAN vol. 012, no. 438 17 November 1988 & JP-A-63 162 034 ( NOBUO KOYAMA ) 5 July 1988 * abstract * | 1-3, 12-14 | TECHNICAL FIELDS SEARCHED (Int. Cl.5 ) |

The present search report has been drawn up for all claims

| Place of search | Date of completion of the search | Examiner |
|---|---|---|
| THE HAGUE | 18 MAY 1993 | KANBIER D.T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................

& : member of the same patent family, corresponding document